# EUROPEAN PATENT SPECIFICATION

(11) **EP 1 611 055 B1**
(45) Date of publication and mention of the grant of the patent: **28.05.2008**
(21) Application number: 04750024.4
(22) Date of filing: 08.04.2004
(51) Int. Cl.: C01B 21/083

(54) **DISTILLATION PROCESS FOR REDUCING THE CONCENTRATION OF DINITROGEN DIFLUORIDE AND DINITROGEN TETRAFLUORIDE IN NITROGEN TRIFLUORIDE**
DESTILLATIONSVERFAHREN ZUR VERRINGERUNG DER KONZENTRATION VON DISTICKSTOFFDIFLUORID UND DISTICKSTOFFTETRAFLUORID IN STICKSTOFFTRIFLUORID
PROCEDE DE DISTILLATION PERMETTANT DE REDUIRE LA CONCENTRATION DE DIFLUORURE DE DIAZOTE ET DE TETRAFLUORURE DE DIAZOTE DANS UN TRIFLUORURE D'AZOTE

(30) Priority: 14.04.2003 US 462756 P
(43) Date of publication of application: 04.01.2006
(73) Proprietor: E. I. DU PONT DE NEMOURS AND COMPANY, Wilmington, Delaware 19898 (US)
(72) Inventor: MILLER, Ralph, Newton, Newark, DE 19711 (US); MAHLER, Barry, Asher, Glen Mills, PA 19342 (US)
(74) Representative: Goddard, Christopher Robert
(86) International application number: PCT/US2004/011249
(87) International publication number: WO 2004/092066

(56) References cited:
- EP-A- 0 807 600
- US-B1- 6 276 168
- US-B2- 6 458 249

## Description

### BACKGROUND OF THE INVENTION

### 1. Field of the Invention.

The present invention relates to a distillation process for reducing the concentration of the impurities dinitrogen difluoride and dinitrogen tetrafluoride in nitrogen trifluoride. The process involves distilling the nitrogen trifluoride in the presence of a compound with a higher normal boiling point than nitrogen trifluoride and removing as a distillation column overhead stream nitrogen trifluoride substantially free of said impurities, removing as a distillation column sidedraw a concentrated stream comprising said impurities, and removing as a distillation bottom stream said compound with a higher normal boiling point than nitrogen trifluoride.

### 2. Description of Related Art.

Various gaseous fluorine-containing compounds are utilized in manufacturing processes that plasma-etch silicon-type materials in order to fabricate semiconductor devices. A major use of nitrogen trifluoride (NF₃) is as a "chemical vapor deposition" (CVD) chamber cleaning gas in semiconductor device manufacture. CVD chamber cleaning gases are used to form plasmas which interact with the internal surfaces of semiconductor fabrication equipment to remove the various undesirable deposits that accumulate over time.

Perfluorinated chemicals such as NF₃ that are used in semiconductor manufacturing applications as cleaning gases are more commonly referred to as "electronic gases". Electronic gases having high purity are critical for such applications. It is known that even very small amounts of impurities in these gases that enter semiconductor device manufacturing tools can result in wide line width and thus less information per device. Moreover, the presence of these impurities, including but not limited to particulates, metals, moisture, and other halocarbons in the plasma etchant or cleaning gases, even when only present in the part-per-million level, increases the defect rate in the production of these high-density integrated circuits. As a result, there has been increasing demand for higher purity etchant and cleaning gases, and an increasing market value for the materials having the required purity. Identification of impurities and methods for their removal consequently represents a significant aspect of preparing the fluorine-containing compounds for these applications.

NF₃ prepared by a variety of methods, such as the method disclosed in US 3,235,474, may contain relatively large amounts of impurities, such as nitrous oxide (N₂O), carbon dioxide (CO₂), dinitrogen difluoride (N₂F₂-cis and/or N₂F₂-trans) and dinitrogen tetrafluoride (N₂F₄). Dinitrogen difluoride and dinitrogen tetrafluoride are particularly undesirable impurities in a nitrogen trifluoride electronic gas product. Under certain conditions and at relatively low concentration, these compounds can form unstable and even explosive compositions. Therefore, in order to obtain high-purity nitrogen trifluoride that is free from dinitrogen difluoride and dinitrogen tetrafluoride for use as an electronic gas, methods allowing for complete removal of such impurities are necessary.

There are a variety of known methods that may be used to reduce N₂F₂, N₂F₄ and other impurities in a NF₃ product, ranging from distillation, chemical and thermal treatments, adsorption on zeolites, silica gel, and activated alumina. Silica gel and activated alumina are known as both adsorbents for removing impurities at low temperature, and as reactants for removing impurities at higher temperatures.

### BRIEF SUMMARY OF THE INVENTION

The present invention provides distillation processes for reduring fluorinated impurities from NF₃ so as to produce a purified NF₃ product. More specifically, the present invention comprises a process for reducing the concentration of at least one impurity selected from the group consisting of dinitrogen difluoride and dinitrogen tetrafluoride in a first mixture comprising nitrogen trifluoride and said at least one impurity, said process comprising:
(a) distilling said first mixture in a distillation column in the presence of a compound having a higher normal boiling point than nitrogen trifluoride; (b) removing a second mixture comprising said at least one impurity from said distillation column at a point between the top and the bottom of said distillation column; (c) removing a third mixture comprising said compound having a higher normal boiling point than nitrogen trifluoride from the bottom of said distillation column; and (d) removing a nitrogen trifluoride product having reduced concentration of said at least one impurity from the top of said distillation column.

### BRIEF DESCRIPTION OF THE DRAWING(S)

Figure 1 is a schematic diagram of a distillation system that can be used for practicing an aspect of the present process.
Figure 2 is a schematic diagram of a distillation system that can be used for practicing an aspect of the present process.

### DETAILED DESCRIPTION OF THE INVENTION

NF₃, in its separate and pure state, exhibits properties that are valued for integrated circuit manufacturing and is typically used in related manufacturing steps. The desire for greater precision and consistency of the effect it has during integrated circuit manufacture has made extremely high purities critical for such applications. The presence of any other compounds in the NF₃ is objectionable for most of its intended uses. For example, even a 1 part-per-million-molar concentration of another compound would be considered an impurity in NF₃ where NF₃ is to be sold as a chemical vapor deposition (CVD) chamber cleaning gas. Processes that allow for manufacture of NF₃ products having purities that approach 99.999 molar percent purity are desirable, but processes that provide at least 99.9999 molar percent purity for electronic gases applications are preferred.

Analytical methods for gauging such low concentrations of impurities in NF₃ are available. For example, methods suitable for analyzing low concentrations of other compounds in NP₃ are disclosed in the 1995 SEMI standards, pages 149-153, SEMI G3.39.91-Standard for Nitrogen Trifluoride.

Conventional processes for manufacturing NF₃ often produce at least one of N₂F₂ and N₂F₄ as impurities in the NF₃ product stream. By N₂F₂ is meant either the cis isomer (N₂F₂-cis, herein also referred to as N₂F₂-c) or the trans isomer (N₂F₂-trans, herein also referred to as N₂F₂-t). The presence of such compounds in the NF₃ product is objectionable for most of its intended uses. The ability to separate and recover a NF₃ product that is substantially-free of such impurities is of considerable value. Herein, "substantially-free" means that at least one of the impurities N₂F₂ and N₂F₄ are present in NF₃ in less than 10 ppm-molar concentration, preferably less than 1 ppm-molar, most preferably less than 0.1 ppm-molar.

The physical properties of mixtures comprising NF₃, N₂F₂ and N₂F₄ are non-ideal and are difficult to model by conventional modeling techniques. The present invention derives from the finding that when mixtures comprising NF₃ and these impurities are distilled in the presence of another compound having a higher normal boiling point than NF₃, the N₂F₂ and N₂F₄ are effectively concentrated within the lower distillation sections of a distillation column. That is to say, when mixtures comprising NF₃ and these impurities are distilled in the presence of another compound having a higher normal boiling point than NF₃, the N₂F₂ and N₂F₄ are effectively concentrated within the bottom 50% of the total number of theoretical stages in a distillation column, and more preferably, within the bottom 25% of the total number of theoretical stages in a distillation column.

By another compound having a higher normal boiling point than NF₃ is meant a compound that has a normal boiling point of from about -90°C to about -20°C. Further, it is preferred that the compound having a higher normal boiling point than NF₃ does not react with NF₃ or the fluorinated impurities under the present process conditions. Suitable compounds having a higher normal boiling point than NF₃ of the present process include compounds from the classes: hydrocarbons, hydrofluorocarbons, hydrochlorofluorocarbons, hydrochlorocarbons, perfluorocarbons and organic oxides and inorganic oxides. Representative hydrocarbons include ethane, propane, and propylene. Representative hydrofluorocarbons include methyl fluoride (HFC-41), difluoromethane (HFC-32), 1,1,1-trifluoroethane (HFC-143a), pentafluoroethane (HFC-125), and fluoroethane (HFC-161). Representative hydrochlorofluorocarbons include chlorodifluoromethane (HCFC-22). Representative hydrochlorocarbons include methyl chloride (HCC-40). Representative perfluorocarbons include hexafluoroethane (PFC-116). Representative oxides include nitrous oxide (N₂O), carbon dioxide (CO₂), carbonyl fluoride (COF₂), and perfluoroacetyl fluoride (CF₃COF). Preferred compounds having a higher normal boiling point than NF₃ of the present process include nitrous oxide (N₂O), chlorodifluoromethane (HCFC-22), difluoromethane (HFC-32), fluoroethane (HFC-161) and methyl fluoride (HFC-41). These compounds may be used alone or in combination with each other as the high boiling compound in the present separation. For example, it is known that N₂O forms azeotropic or azeotrope-like compositions with HFC-23. The respective N₂O/HFC-23 azeotropic or azeotrope-like compositions may be employed as the compound having a higher normal boiling point than NF₃ in the present separation.

More specifically, when NF₃ and said impurities are distilled in the presence of the present compounds having a higher normal boiling point than NF₃, the impurities N₂F₂ and N₂F₄ form a maximum concentration at a point within the distillation columns packed or trayed sections rather than in either the distillation column's bottoms or overhead streams. As such, withdrawing a sidedraw from a point between the top and bottom of the distillation column provides a stream higher in concentration of N₂F₂ and N₂F₄ than in the distillation bottoms or overhead, which facilitates removal of said at least one of N₂F₂ and N₂F₄ from the NF₃ product.

From the standpoint of reducing said impurities from an NF₃ product, it is more economical to reduce said impurities from a stream containing a "higher" concentration rather than from a stream having said impurities at a "lower" concentration. By removing and treating a sidestream in which these impurities have been concentrated, known thermal and adsorptive purification processes for separating N₂F₂ and N₂F₄ from NF₃ can be applied to smaller volumes of process material and the associated equipment can in turn be smaller and will operate more efficiently. In addition, larger amounts of NF₃ substantially free of impurities may be obtained as a product of the distillation.

Such a sidedraw also provides a method of limiting or reducing the maximum concentration of these impurities developed within the distillation column. N₂F₂ and N₂F₄ are thought to be more reactive than NF₃, and under certain conditions and at relatively low concentration, N₂F₂ and N₂F₄ compounds can form unstable and even explosive compositions and it may be desirable to limit their intracolumn concentration for purposes of materials compatibility or process safety. For example, it is generally preferred that the concentration of these compounds be limited to below 2,000 ppm-molar, more preferably to less than 1,000 ppm-molar intracolumn concentration each of N₂F₂ and N₂F₄.

Several of the compounds that are produced by processes that produce NF₃ are higher boiling than NF₃. Examples of such compounds include hexafluoroethane (C₂F₆ or PFC-116), sulfur hexafluoride (SF₆), carbon dioxide (CO₂). In addition, compounds higher boiling than NF₃ may be added as extractants in the distillation of a stream comprising NF₃ and CF₄ to enable the separation of the NF₃ and CF₄. Examples of such higher boiling compounds suitable as extractants are disclosed in US 6,458,249, herein incorporated by reference, and include chlorodifluoromethane (CHClF₂ or HCFC-22), difluoromethane (CH₂F₂ or HFC-32), ethane (C₂H₆), fluoroethane (C₂H₅F or HFC-161), methylfluoride (CH₃F or HFC-41), pentafluoroethane (C₂HF₅ or HFC-125) and nitrous oxide (N₂O).

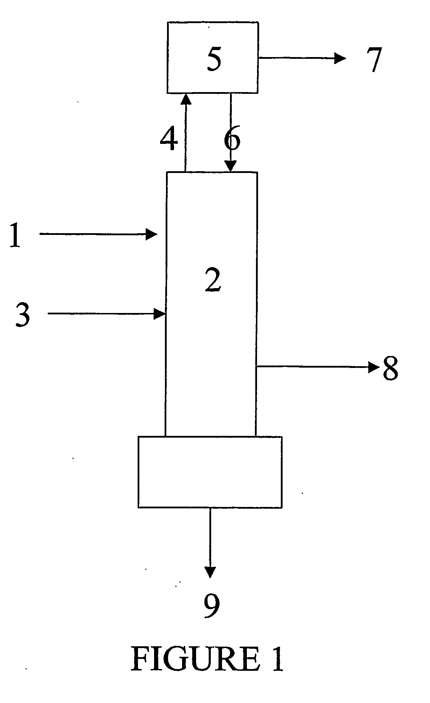

Figure 1 schematically illustrates a system that may be used to perform aspects of the inventive distillation process. A first mixture comprising NF₃ and at least one of N₂F₂ and N₂F₄ is supplied via conduit 1 to distillation column 2. At least one compound higher boiling than NF₃ is also supplied to the distillation column either together with the first mixture, or optionally via an alternate feed point to the column, such as via conduit 3. The overhead distillate from the column is sent via conduit 4 to condenser 5. At least part of the condensed distillate stream is returned to the column 2 as reflux 6. The remainder of the condensed distillate is recovered via conduit 7 as NF₃ product substantially-free of N₂F₂ or N₂F₄. A stream comprising at least one of N₂F₂ and N₂F₄ is removed from the column 6 as a sidedraw 8 from the column. A stream comprising said at least one compound higher boiling than NF₃ is removed from the column 2 bottoms via conduit 9 and may be recovered as product. Sidedraw 8 may optionally be sent to a process step where said N₂F₂ and N₂F₄ are removed, and said treated sidedraw stream may then optionally be returned to distillation column 6 for further distillation.

Said invention may be practiced in a distillation column run under a variety of temperatures and pressures. The temperatures at the top of the distillation column should be sufficient to allow condensation of the NF₃ at the pressures the column is operated, but it is preferred that the lowest temperature in the column be above the freezing point of said compounds higher boiler than NF₃. For example, temperatures at the top of the column ranging from -90°C to -50°C are preferred, but lower temperatures at the top of the column may be employed dependent on the higher boiling compounds that may be present.

The present invention is conveniently practiced in combination with the process disclosed in US 6,458,249 for removing CF₄ from NF₃ by use of an extractant agent in a distillation process. In said process a stream comprising NF₃, CF₄ and at least one of N₂F₂ and N₂F₄ can be fed to a first column where said stream is distilled in the presence of an extractant agent. In the presence of said extractant agent, the CF₄ is separated from the NF₃, with the CF₄ removed in the column distillate. A bottoms streams comprising NF₃, extractant agent, and at least one of N₂F₂ and N₂F₄ is then sent to a second distillation column. In the second distillation column, in the presence of said extractant agent, said at least one of N₂F₂ and N₂F₄ will exhibit a concentration maxiumum at an intermediate point within that column and can be removed from the distillation column in a sidedraw stream while NF₃ is recovered as an overhead product. This sidedraw stream may be optionally treated to remove said at least one of N₂F₂ and N₂F₄ and the treated stream may then be optionally returned to the distillation train. The extractant is removed from the second column as a bottoms stream, and is optionally recycled back to the extraction column. If other compounds are present that exit the second column bottoms with the extractant agent, some portion of this bottoms stream may either be purged or optionally treated to remove these other high boilers, with the treated bottoms stream then optionally return to the distillation train.

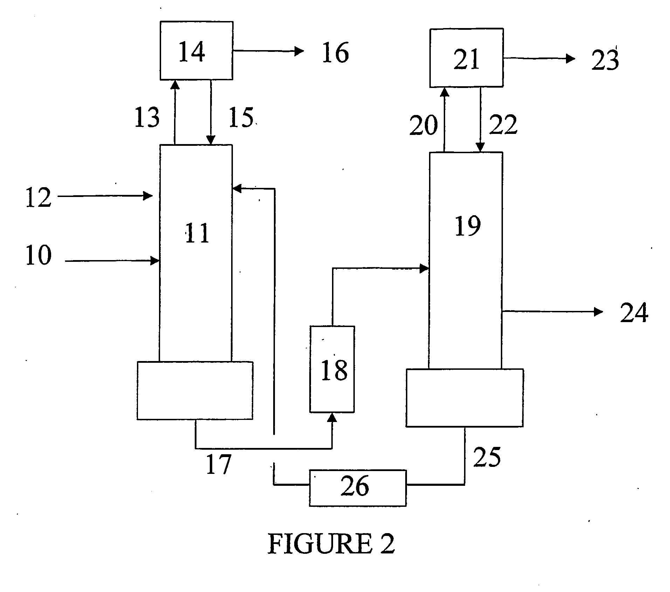

Figure 2 schematically illustrates a system which can be used to perform aspects of the inventive extractive distillation process. A first mixture comprising PFC-14, NF₃ and at least one of N₂F₂ and N₂F₄ is supplied via conduit 10 to distillation column 11. At least one extractive entraining agent, e.g., HCFC-22, is supplied via conduit 12 to distillation column 11 at a feed point higher up the distillation column than the feed point of the mixture to be separated, e.g., PFC-14 and NF₃. The overhead distillate from the column is sent via conduit 13 to condenser 14. At least part of the condensed distillate stream is returned to the column 11 as reflux 15. The remainder of the condensed distillate is recovered via conduit 16 as PFC-14 product substantially-free of NF₃, HCFC-22 and said at least one of N₂F₂ and N₂F₄.

A stream comprising HCFC-22, NF₃ substantially-free of PFC-14, and said at least one of N₂F₂ and N₂F₄ is then removed from the column 11 bottoms via conduit 17 and sent to cooler 18 and from there fed to distillation column 19. The distillate from column 19 may be fed via conduit 20 to condenser 21. From condenser 21, some amount of condensed distillate may be returned to the column 19 as reflux via conduit 22, while the remainder recovered as product, e.g., as NF₃ substantially-free of PFC-14, extractive entraining agent, and at least one of N₂F₂ and N₂F₄ via conduit 23. A stream comprising at least one of N₂F₂ and N₂F₄ is removed from the column 19 as a sidedraw 24 from the column. Extractive entraining agent, e.g., HCFC-22, with the concentration of non-HCFC-22 compounds reduced compared to their concentrations in stream 17 is obtained as the distillation column bottoms 25. Stream 25 may optionally be fed to cooler 26 and then returned to distillation column 11 as extractant feed, fed to the column at a feed point higher up the column than that feed point of the first mixture to be separated, e.g., PFC-14 and NF₃.

The present invention is optionally practiced in combination with known processes for removing N₂F₂ from a stream comprising NF₃. For example, a side-draw stream comprising N₂F₂ can be treated by passing the side-draw stream through a heated zone consisting of particulate metal, or packed with solid fluorides to decompose and thus remove said N₂F₂, methods such as those disclosed in US 4,193,976 and US 5,183,647. The treated side-draw stream may then be optionally returned to the distillation train. The current invention provides an advantage over the prior art, in that the N₂F₂ is concentrated into a small stream which increases the efficiency and economy of the previously disclosed processes.

The present invention may be practiced on a stream comprising N₂F₂ and N₂F₄ where said impurities occur over a range of initial concentrations. For example, said invention may be practiced on a first mixture where N₂F₂ and N₂F₄ are present in concentrations as high as 10,000 ppm-molar, However, it is preferred that the N₂F₂ and N₂F₄ concentrations in the first mixture be less than 5,000 ppm-molar, more preferably less than 2,000 ppm-molar. Where the initial concentrations of N₂F₂ are higher, said invention is conveniently optionally practiced in combination with known processes for removing N₂F₂ from a stream comprising NF₃. For example, a first mixture comprising NF₃ and N₂F₂ can be treated by passing the side-draw stream through a heated zone consisting of particulate metal, or packed with solid fluorides to decompose and thus reduce the concentration of said N₂F₂ prior to practicing the present invention.

### EXAMPLES

To determine the relative volatility of any given two compounds in a distillation, the PTx Method is preferred. In this procedure, the total absolute pressure in a cell of known volume is measured at a constant temperature for various compositions of the two compounds. Use of the PTx Method is described in greater detail in "Phase Equilibrium in Process Design", Wiley-Interscience Publisher, 1970, written by Harold R. Null, on pages 124 to 126.

These measurements can be converted into equilibrium vapor and liquid compositions in the PTx cell by using an activity coefficient equation model, such as the Non-Random, Two-Liquid (NRTL) equation, to represent liquid phase nonidealities. Use of an activity coefficient equation, such as the NRTL equation is described in greater detail in "The Properties of Gases and Liquids," 4th edition, published McGraw Hill, written by Reid, Prausnitz and Poling, on pages 241 and 387, and in "Phase Equilibria in Chemical Engineering," published by Butterworth Publishers, 1985, written by Stanley M. Walas, pages 165 to 244.

Without wishing to be bound by any theory or explanation, it is believed that the NRTL equation, together with the PTx cell data, can sufficiently predict whether or not combinations of compounds described herein behave in an ideal manner, and can sufficiently predict the relative volatilities of the components in such mixtures during a distillation.

The following examples are provided to illustrate certain aspects of the present invention, and are not intended to limit the scope of the invention. The following examples employ the NRTL equations identified above. In the following examples, each stage is based upon a 100% operational or performance efficiency. The total stages include condenser and reboiler, with the condenser counted as stage No. 1, and the reboiler as the highest numbered stage. In the following examples, flow rates are given in pounds(weight)-per-hour(pph); temperatures are expressed in degrees Celsius (°C.); pressures are expressed in pound-per-square-inch-absolute (psia); stream concentrations are expressed in mole percent (mole %) or parts-per-billion-by-moles (ppbm or ppb-molar).

### Comparative Example 1

In this comparative example, a crude NF₃ feed stream comprising NF₃ and N₂F₂-c, N₂F₂-t, and N₂F₄ as impurities is fed to a distillation column operated under the conditions shown in Table 1. The concentrations of the N₂F₂-c, N₂F₂-t and N₂F₄ in the feed stream are 1,000 ppm-molar each. The column in this comparative example is operated to remove the NF₃ from the column as an overhead distillate, while recovering the impurities as column bottoms. The results of this distillation are shown in Table 1.

| **TABLE 1** | | | |
|---|---|---|---|
| **CASE NUMBER** | **1** | **2** | **3** |
| # of Stages | 42 | 42 | 42 |
| Crude Feed Stage | 30 | 30 | 30 |
| | | | |
| Column Top Temperature (°C) | -75 | -75 | -75 |
| Reflux Temperature (°C) | -75 | -75 | -75 |
| Distillate Temperature (°C) | -75 | -75 | -75 |
| Bottoms Temperature (°C) | -51 | -66 | -72 |
| Crude Feed Temperature (°C) | -60 | -60 | -60 |
| | | | |
| Top Pressure (psia) | 215 | 215 | 215 |
| Condenser Pressure (psia) | 215 | 215 | 215 |
| Bottoms Pressure (psia) | 217 | 217 | 217 |
| | | | |
| Overhead Takeoff Rate (PPH) | 99.65 | 99.20 | 97.20 |
| Reflux Rate (PPH) | 2000.00 | 2000.00 | 2000.00 |
| Bottoms Takeoff Rate (PPH) | 0.35 | 0.80 | 2.80 |
| | | | |

| **Crude NF₃ Feed** | | | |
|---|---|---|---|
| NF₃ (PPH) | 99.70 | 99.70 | 99.70 |
| N₂F₂-c (PPH) | 0.10 | 0.10 | 0.10 |
| N₂F₂-t (PPH) | 0.10 | 0.10 | 0.10 |
| N₂F₄ (PPH) | 0.10 | 0.10 | 0.10 |
| | | | |

| **Overhead Takeoff** | | | |
|---|---|---|---|
| NF₃ (PPH) | 99.65 | 99.20 | 97.20 |
| N₂F₂-c (PPH) | 0.00000 | 0.00000 | 0.00000 |
| N₂F₂-t (PPH) | 0.00000 | 0.00000 | 0.00000 |
| | | | |

| **Overhead NF₃ Product Composition** | | | |
|---|---|---|---|
| N₂F₂-c (PPB-MOLAR) | 0.001 | 0.000 | 0.000 |
| N₂F₂-t (PPB-MOLAR) | 8.809 | 0.991 | 0.356 |
| TOT IMP (PPB-MOLAR) | 8.810 | 0.991 | 0.356 |
| NF₃ (MOLE %) | 100.000 | 100.000 | 100.000 |
| | | | |

| **Bottoms Takeoff** | | | |
|---|---|---|---|
| NF₃ (PPH) | 0.0500 | 0.5000 | 2.5000 |
| N₂F₂-c (PPH) | 0.1000 | 0.1000 | 0.1000 |
| N₂F₂-t (PPH) | 0.1000 | 0.1000 | 0.1000 |
| N₂F₄ (PPH) | 0.1000 | 0.1000 | 0.1000 |
| | | | |

| **Maximum Internal Concentrations & Stage at Which It Occurs** | | | |
|---|---|---|---|
| N₂F₂-c (MOLE %) | 32.6000 | 13.7000 | 3.8600 |
| MAX N₂F₂-c STAGE NO. | 41 | 42 | 42 |
| N₂F₂-t (MOLE %) | 36.7000 | 13.7000 | 3.8600 |
| MAX N₂F₂-t STAGE NO. | 41 | 42 | 42 |
| N₂F₄ (MOLE %) | 20.5000 | 8.7100 | 2.4500 |
| MAX N₂F₄ STAGE NO. | 42 | 42 | 42 |
| | | | |
| COLUMN DIAMETER (IN) | 8 | 8 | 8 |

Under the conditions shown in Table 1, the point of maximum concentration of each of the N₂F₂-cis, N₂F₂-trans, and N₂F₄ are at around stages 41 and 42, or more specifically at around the reboiler or bottoms draw of the distillation column. Increasing the bottoms takeoff rate and changing the reboiler temperatures does not change this point of maximum concentration.

### Comparative Example 2

In this comparative example, a crude NF₃ feed stream comprising NF₃ and hexafluoroethane (PFC-116), and N₂F₂-c, N₂F₂-t, and N₂F₄ as impurities, is fed to a distillation column operated under the conditions shown in Table 2. The concentrations of the N₂F₂-c, N₂F₂-t and N₂F₄ in the feed stream are 1,000 ppm-molar each. The column in this comparative example is operated to remove the NF₃ from the column as an overhead distillate, while recovering the impurities as column bottoms. In this comparative example, there is no material removed as a sidedraw stream. The results of this distillation are shown in Table 2.

| **TABLE 2** | | | |
|---|---|---|---|
| **CASE NUMBER** | **4** | **5** | **6** |
| | | | |
| # of Stages | 42 | 42 | 42 |
| Crude Feed Stage | 30 | 30 | 30 |
| Vapor Side-Draw Stage | 35 | 35 | 35 |
| | | | |
| Column Top Temperature (°C) | -75 | -75 | -75 |
| Reflux Temperature (°C) | -75 | -75 | -75 |
| Distillate Temperature (°C) | -75 | -75 | -75 |
| Bottoms Temperature (°C) | -9 | -11 | -17 |
| Crude Feed Temperature (°C) | -60 | -60 | -60 |
| | | | |
| Top Pressure (psia) | 215 | 215 | 215 |
| Condenser Pressure (psia) | 215 | 215 | 215 |
| Bottoms Pressure (psia) | 217 | 217 | 217 |
| | | | |
| Overhead Takeoff Rate (PPH) | 99.65 | 99.20 | 97.20 |
| Reflux Rate (PPH) | 2000.00 | 2000.00 | 2000.00 |
| Bottoms Takeoff Rate (PPH) | 50.35 | 50.80 | 52.80 |
| Vapor Sidedraw Rate (PPH) | 0.00 | 0.00 | 0.00 |
| | | | |

| **Crude NF₃ Feed** | | | |
|---|---|---|---|
| NF₃ (PPH) | 99.70 | 99.70 | 99.70 |
| F116 (PPH) | 50.00 | 50.00 | 50.00 |
| N₂F₂-c (PPH) | 0.10 | 0.10 | 0.10 |
| N₂F₂-t (PPH) | 0.10 | 0.10 | 0.10 |
| N₂F₄ (PPH) | 0.10 | 0.10 | 0.10 |
| | | | |

| **Overhead Takeoff** | | | |
|---|---|---|---|
| NF₃ (PPH) | 99.65 | 99.20 | 97.20 |
| N₂F₂-c (PPH) | 0.00000 | 0.00000 | 0.00000 |
| N₂F₂-t(PPH) | 0.00005 | 0.00000 | 0.00000 |
| | | | |

| **Overhead NF₃ Product Composition** | | | |
|---|---|---|---|
| N₂F₂-c (PPB-MOLAR) | 0.251 | 0.005 | 0.001 |
| N₂F₂-t (PPB-MOLAR) | 574.047 | 23.133 | 2.585 |
| TOT IMP (PPB-MOLAR) | 574.298 | 23.139 | 2.586 |
| NF₃ (MOLE %) | 100.000 | 100.000 | 100.000 |
| | | | |

| **Bottoms Takeoff** | | | |
|---|---|---|---|
| NF₃ (PPH) | 0.0500 | 0.5000 | 2.5000 |
| F116 (PPH) | 50.0000 | 50.0000 | 50.0000 |
| N₂F₂-c (PPH) | 0.0997 | 0.1000 | 0.1000 |
| N₂F₂-t (PPH) | 0.0994 | 0.0999 | 0.1000 |
| N₂F₄ (PPH) | 0.1000 | 0.1000 | 0.1000 |
| | | | |

| **Column Sidedraw** | | | |
|---|---|---|---|
| NF₃ (PPH) | 0.0000 | 0.0000 | 0.0000 |
| F116 (PPH) | 0.0000 | 0.0000 | 0.0000 |
| N₂F₂-c (PPH) | 0.0000 | 0.0000 | 0.0000 |
| N₂F₂-t (PPH) | 0.0000 | 0.0000 | 0.0000 |
| N₂F₄ (PPH) | 0.0000 | 0.0000 | 0.0000 |
| | | | |

| **Maximum Internal Concentrations & Stage at Which It Occurs** | | | |
|---|---|---|---|
| N₂F₂-c (MOLE %) | 36.2000 | 17.7000 | 4.8500 |
| MAX N₂F₂-c STAGE NO. | 37 | 38 | 39 |
| N₂F₂-t (MOLE %) | 42.1000 | 19.6000 | 5.5700 |
| MAX N₂F₂-t STAGE NO. | 34 | 37 | 39 |
| N₂F₄ (MOLE %) | 0.3380 | 0.3050 | 0.2460 |
| MAX N₂F₄ STAGE NO. | 40 | 40 | 41 |
| | | | |
| COLUMN DIAMETER (IN) | 8 | 8 | 8 |

In contrast to comparative example 1, the presence of PFC-116 in this comparative example causes the point of maximum concentration for each of N₂F₂-c, N₂F₂-t and N₂F₄ to occur at higher points in the distillation column. Without a sidedraw stream, the column concentration of each increase significantly, up to 42.1 mole % in one case, before these impurities appear in the bottom stream and can be removed from the column.

### Example 1

This example is identical to comparative example 1, with the exception that a 4 pph sidedraw is removed from the distillation column at stage 35. The results of this distillation are shown in Table 3.

| **TABLE 3** | | | |
|---|---|---|---|
| **CASE NUMBER** | **7** | **8** | **9** |
| | | | |
| # of Stages | 42 | 42 | 42 |
| Crude Feed Stage | 30 | 30 | 30 |
| Vapor Side-Draw Stage | 35 | 35 | 35 |
| | | | |
| Column Top Temperature (°C) | -75 | -75 | -75 |
| Reflux Temperature (°C) | -75 | -75 | -75 |
| Distillate Temperature (°C) | -75 | -75 | -75 |
| Bottoms Temperature (°C) | -8 | -10 | -17 |
| Crude NF₃ Feed Temperature (°C) | -60 | -60 | -60 |
| | | | |
| Top Pressure (psia) | 214.7 | 214.7 | 214.7 |
| Condenser Pressure (psia) | 214.7 | 214.7 | 214.7 |
| Bottoms Pressure (psia) | 216.7 | 216.7 | 216.7 |
| | | | |
| Overhead Takeoff Rate (PPH) | 96.11 | 95.38 | 93.26 |
| Reflux Rate (PPH) | 2000.00 | 2000.00 | 2000.00 |
| Bottoms Takeoff Rate (PPH) | 49.89 | 50.62 | 52.74 |
| Vapor Sidedraw Rate (PPH) | 4.00 | 4.00 | 4.00 |
| | | | |

| **Crude NF₃ Feed** | | | |
|---|---|---|---|
| NF₃ (PPH) | 99.70 | 99.70 | 99.70 |
| F116 (PPH) | 50.00 | 50.00 | 50.00 |
| N₂F₂-c (PPH) | 0.10 | 0.10 | 0.10 |
| N₂F₂-t (PPH) . | 0.10 | 0.10 | 0.10 |
| N₂F₄ (PPH) | 0.10 | 0.10 | 0.10 |
| | | | |

| **Overhead Takeoff** | | | |
|---|---|---|---|
| NF₃ (PPH) | 96.11 | 95.38 | 93.26 |
| N₂F₂-c (PPH) | 0.00000 | 0.00000 | 0.00000 |
| N₂F₂-t (PPH) | 0.00000 | 0.00000 | 0.00000 |
| | | | |

| **Overhead NF₃ Product Composition** | | | |
|---|---|---|---|
| N₂F₂-c (PPB-MOLAR) | 0.004 | 0.002 | 0.000 |
| N₂F₂-t (PPB-MOLAR) | 7.405 | 5.271 | 1.841 |
| TOT IMP (PPB-MOLAR) | 7.408 | 5.273 | 1.842 |
| NF₃ (MOLE %) | 100.000 | 100.000 | 100.000 |
| | | | |

| Bottoms Takeoff | | | |
|---|---|---|---|
| NF₃(PPH) | 0.0500 | 0.5000 | 2.5000 |
| F116 (PPH) | 49.7380 | 49.9710 | 49.9810 |
| N₂F₂-c (PPH) | 0.0006 | 0.0313 | 0.0893 |
| N₂F₂-t (PPH) | 0.0006 | 0.0183 | 0.0719 |
| N₂F₄ (PPH) | 0.0983 | 0.1000 | 0.1000 |
| | | | |

| **Column Sidedraw** | | | |
|---|---|---|---|
| NF₃ (PPH) | 3.5377 | 3.8202 | 3.9418 |
| F116 (PPH) | 0.2618 | 0.0294 | 0.0194 |
| N₂F₂-c (PPH) | 0.0994 | 0.0687 | 0.0107 |
| N₂F₂-t (PPH) | 0.0994 | 0.0817 | 0.0281 |
| N₂F₄ (PPH) | 0.0017 | 0.0000 | 0.0000 |
| | | | |

| **Maximum Internal Concentrations & Stage at Which It Occurs** | | | |
|---|---|---|---|
| N_{Z}F₂-c (MOLE %) | 3.5100 | 9.2100 | 4.4800 |
| MAX N₂F₂-c STAGE NO. | 35 | 37 | 39 |
| N₂F₂-t (MOLE %) | 2.9000 | 5.8900 | 4.1200 |
| MAX N₂F₂-t STAGE NO. | 35 | 37 | 39 |
| N₂F₄ (MOLE %) | 0.4650 | 0.3230 | 0.2470 |
| MAX N₂F₄ STAGE NO. | 37 | 40 | 41 |
| | | | |
| COLUMN DIAMETER (IN) | 8 | 8 | 8 |

This example shows how a sidedraw stream may be used to remove N₂F₂-t, N₂F₂-c and N₂F₄ from the column, and so reduce the concentration of each developed. The points of maximum concentration of each is still at a higher point than in comparative example 1, but the maximum concentrations of N₂F₂-c and N₂F₂-t are considerably reduced compared to comparative example 2.

### Comparative Example 3

In this comparative example, a crude NF₃ feed stream comprising NF₃ and hexafluoroethane (PFC-116) and N₂F₂-c, N₂F₂-t, and N₂F₄ as impurities is fed to a distillation column operated under the conditions shown in Table 4. The concentrations of the N₂F₂-c, N₂F₂-t and N₂F₄ in the feed stream are 1000 ppm-molar each. The feed rate of PFC-116 is 5000 pph. The column in this example is operated to remove the NF₃ from the column as an overhead distillate, while recovering the impurities as column bottoms. In this comparative example, there is no material removed as a sidedraw stream. The results of this distillation are shown in Table 4.

| **TABLE 4** | | | |
|---|---|---|---|
| **CASE NUMBER** | **10** | **11** | **12** |
| # of Stages | 42 | 42 | 42 |
| Crude Feed Stage | 30 | 30 | 30 |
| Vapor Side-Draw Stage | 35 | 35 | 35 |
| | | | |
| Column Top Temperature (°C) | -75 | -75 | -75 |
| Reflux Temperature (°C) | -75 | -75 | -75 |
| Distillate Temperature (°C) | -75 | -75 | -75 |
| Bottoms Temperature (°C) | -8 | -8 | -8 |
| Crude Feed Temperature (°C) | -60 | -60 | -60 |
| | | | |
| Top Pressure (psia) | 214.7 | 214.7 | 214.7 |
| Condenser Pressure (psia) | 214.7 | 214.7 | 214.7 |
| Bottoms Pressure (psia) | 216.7 | 216.7 | 216.7 |
| | | | |
| Overhead Takeoff Rate (PPH) | 99.83 | 99.20 | 97.19 |
| Reflux Rate (PPH) | 5000.00 | 5000.00 | 5000.00 |
| Bottoms Takeoff Rate (PPH) | 5000.12 | 5000.75 | 5002.76 |
| Vapor Sidedraw Rate (PPH) | 0.00 | 0.00 | 0.00 |
| | | | |

| **Crude NF₃ Feed** | | | |
|---|---|---|---|
| NF₃ (PPH) | 99.70 | 99.70 | 99.70 |
| F116 (PPH) | 5000.00 | 5000.00 | 5000.00 |
| N₂F₂-c (PPH) | 0.10 | 0.10 | 0.10 |
| N₂F₂-t (PPH) | 0.10 | 0.10 | 0.10 |
| N₂F₄ (PPH) | 0.10 | 0.10 | 0.10 |
| | | | |

| **Overhead Takeoff** | | | |
|---|---|---|---|
| NF₃ (PPH) | 99.65 | 99.2 | 97.19 |
| F116 (PPH) | 0.00000 | 0.00000 | 0.00000 |
| N₂F₂-c (PPH) | 0.08330 | 0.00000 | 0.00000 |
| N₂F₂-t (PPH) | 0.09940 | 0.00044 | 0.00004 |
| | | | |

| **Overhead NF₃ Product Composition** | | | |
|---|---|---|---|
| F116 (PPB-MOLAR) | 3.232 | 0.000 | 0.000 |
| N₂F₂-c (PPB-MOLAR) | 897199.403 | 17.664 | 0.862 |
| N₂F₂-t (PPB-MOLAR) | 1070901.558 | 4752.819 | 435.402 |
| TOT IMP (PPB-MOLAR) | 1968104.193 | 4770.483 | 436.264 |
| NF₃ (MOLE %) | 99.803 | 100.000 | 100.000 |
| | | | |

| **Bottoms Takeoff** | | | |
|---|---|---|---|
| NF₃(PPH) | 0.0500 | 0.5000 | 2.5000 |
| F116 (PPH) | 4999.9490 | 4999.9550 | 4999.9640 |
| N₂F₂-c (PPH) | 0.0165 | 0.0985 | 0.0987 |
| N₂F₂-t (PPH) | 0.0006 | 0.0989 | 0.0993 |
| N₂F₄ (PPH) | 0.1000 | 0.1000 | 0.1000 |
| | | | |

| **Column Sidedraw** | | | |
|---|---|---|---|
| NF₃ (PPH) | 0.0000 | 0.0000 | 0.0000 |
| F116 (PPH) | 0.0000 | 0.0000 | 0.0000 |
| N₂F₂-c (PPH) | 0.0000 | 0.0000 | 0.0000 |
| N₂F₂-t (PPH) | 0.0000 | 0.0000 | 0.0000 |
| N₂F₄ (PPH) | 0.0000 | 0.0000 | 0.0000 |
| | | | |

| **Maximum Internal Concentrations & Stage at Which It Occurs** | | | |
|---|---|---|---|
| N₂F₂-c (MOLE %) | 86.2000 | 40.2000 | 17.5000 |
| MAX N₂F₂-c STAGE NO. | 22 | 28 | 29 |
| N₂F₂-t (MOLE %) | 6.8800 | 30.9000 | 15.3000 |
| MAX N₂F₂-t STAGE NO. | 12 | 26 | 28 |
| N₂F₄ (MOLE %) | 0.0041 | 0.0039 | 0.0037 |
| MAX N₂F₄ STAGE NO. | 34 | 36 | 37 |
| | | | |
| COLUMN DIAMETER (IN) | 8 | 8 | 8 |

In this comparative example, the feed rate of PFC-116 relative to that of NF₃ in the crude feed stream is comparable to what would appear in a stripper column having no side draw, said stripper column following an extractive distillation column using 116 as the extractant. The increase in PFC-116 fed versus comparative example 2 causes the points of maximum concentration of each of the N₂F₂-c, N₂F₂-t and N₂F₄ to shift even further up the distillation column, and causes a substantial increase in the intracolumn concentration maximum of N₂F₂-c and N₂F₂-t versus comparative example 2. Combined, these cause a significant increase in the concentration of each of N₂F₂-c, N₂F₂-t and N₂F₄ in the NF₃ product in the column distillate.

### Example 2

This Example is identical to comparative example 3, except that there is now a 10 pph sidedraw and the number of stages has been increased from 42 to 62. The results of this distillation may be seen in Table 5.

| **TABLE 5** | | | |
|---|---|---|---|
| **CASE NUMBER** | **13** | **14** | **15** |
| | | | |
| # of Stages | 62 | 62 | 62 |
| Crude Feed Stage | 45 | 45 | 45 |
| Vapor Side-Draw Stage | 50 | 50 | 50 |
| | | | |
| Column Top Temperature (°C) | -75 | -75 | -75 |
| Reflux Temperature (°C) | -75 | -75 | -75 |
| Distillate Temperature (°C) | -75 | -75 | -75 |
| Bottoms Temperature (°C) | -8 | -8 | -8 |
| Crude NF₃ Feed Temperature (°C) | -60 | -60 | -60 |
| | | | |
| Top Pressure (psia) | 215 | 215 | 215 |
| Condenser Pressure (psia) | 215 | 215 | 215 |
| Bottoms Pressure (psia) | 217 | 217 | 217 |
| | | | |
| Overhead Takeoff Rate (PPH) | 98.86 | 94.53 | 89.98 |
| Reflux Rate (PPH) | 5000.00 | 5000.00 | 5000.00 |
| Bottoms Takeoff Rate (PPH) | 4991.14 | 4995.47 | 5000.02 |
| Vapor Sidedraw Rate (PPH) | 10.00 | 10.00 | 10.00 |
| | | | |

| **Crude NF₃ Feed** | | | |
|---|---|---|---|
| NF₃ (PPH) | 99.70 | 99.70 | 99.70 |
| F116 (PPH) | 5000.00 | 5000.00 | 5000.00 |
| N₂F₂-c (PPH) | 0.10 | 0.10 | 0.10 |
| N₂F₂-t (PPH) | 0.10 | 0.10 | 0.10 |
| N₂F₄ (PPH) | 0.10 | 0.10 | 0.10 |
| | | | |

| **Overhead Takeoff** | | | |
|---|---|---|---|
| NF₃ (PPH) | 98.86000 | 94.53000 | 89.98000 |
| N₂F₂-c (PPH) | 0.00000 | 0.00000 | 0.00000 |
| N₂F₂-t (PPH) | 0.00000 | 0.00000 | 0.00000 |
| | | | |

| **Overhead NF₃ Product Composition** | | | |
|---|---|---|---|
| N₂F₂-c (PPB-MOLAR) | 0.000 | 0.000 | 0.000 |
| N₂F₂-t (PPB-MOLAR) | 0.496 | 0.048 | 0.024 |
| TOT IMP (PPB-MOLAR) | 0.496 | 0.048 | 0.024 |
| NF₃ (MOLE %) | 100 | 100 | 100 |
| | | | |

| **Bottoms Takeoff** | | | |
|---|---|---|---|
| NF₃ (PPH) | 0.0500 | 0.5000 | 2.5000 |
| F116 (PPH) | 4990.9880 | 4994.8650 | 4997.4100 |
| N₂F₂-c (PPH) | 0.0005 | 0.0007 | 0.0034 |
| N₂F₂-t (PPH) | 0.0016 | 0.0016 | 0.0044 |
| N₂F₄ (PPH) | 0.0996 | 0.0998 | 0.0999 |
| | | | |

| **Column Sidedraw** | | | |
|---|---|---|---|
| NF₃ (PPH) | 0.7902 | 4.6670 | 7.2175 |
| F116 (PPH) | 9.0115 | 5.1351 | 2.5903 |
| N₂F₂-c (PPH) | 0.0995 | 0.0993 | 0.0966 |
| N₂F₂-t (PPH) | 0.0984 | 0.0984 | 0.0956 |
| N₂F₄ (PPH) | 0.0004 | 0.0002 | 0.0001 |
| | | | |

| **Maximum Internal Concentrations & Stage at Which It Occurs** | | | |
|---|---|---|---|
| N₂F₂-c (MOLE %) | 13.8000 | 1.8700 | 0.9480 |
| MAX N₂F₂-c STAGE NO. | 44 | 44 | 44 |
| N₂F₂-t (MOLE %) | 19.9000 | 3.5000 | 1.9100 |
| MAX N₂F₂-t STAGE NO. | 43 | 44 | 44 |
| N₂F₄ (MOLE %) | 0.0042 | 0.0040 | 0.0037 |
| MAX N₂F₄ STAGE NO. | 52 | 55 | 56 |
| | | | |
| COLUMN DIAMETER (IN) | 8 | 8 | 8 |

This example shows how a sidedraw stream may be used to remove N₂F₂-t, N₂F₂-c and N₂F₄ from the column, and so reduce the concentration of each developed. The combination of increased column stages and sidedraw also allow NF₃ substantially free of impurities to be obtained as column distillate.

### Comparative Example 4

In this comparative example, a crude NF₃ feed stream comprising NF₃ and N₂F₂-c, N₂F₂-t, and N₂F₄ as impurities is fed to a distillation column operated under the conditions shown in Table 6. The concentrations of the N₂F₂-c, N₂F₂-t and N₂F₄ in the feed stream are 1,000 ppm-molar each. In case number 15, no additional high boiling compound is fed. In case numbers 16, 17, 18, 19 and 20 the additional high boilers PFC-116, HCFC-22, HFC-23, HFC-32 and HFC-125 respectively are also fed to the column in the crude NF₃ feed steam. The column in this comparative example is operated to remove the NF₃ from the column as an overhead distillate, while recovering the impurities as column bottoms. In this comparative example, there is no material removed as a sidedraw stream. The results of this distillation are shown in Table 6.

| **Table 6** | | | | | | |
|---|---|---|---|---|---|---|
| | | | | | | |

| **CASE NUMBER** | **15** | **16** | **17** | **18** | **19** | **20** |
|---|---|---|---|---|---|---|
| | | | | | | |

| **High Boiler** | None | PFC-116 | HCFC-22 | HFC-23 | HFC-32 | HFC-125 |
|---|---|---|---|---|---|---|
| | | | | | | |
| # of Stages | 42 | 42 | 42 | 42 | 42 | 42 |
| Crude Feed Stage | 30 | 30 | 30 | 30 | 30 | 30 |
| Vapor Sidedraw Stage | 35 | 35 | 35 | 35 | 35 | 35 |
| | | | | | | |
| Column Top Temperature (°C) | -75 | -75 | -75 | -75 | -75 | -75 |
| Reflux Temperature (°C) | -75 | -75 | -75 | -75 | -75 | -75 |
| Distillate Temperature (°C) | -75 | -75 | -75 | -75 | -75 | -75 |
| Bottoms Temperature (°C) | -51 | -9 | 36 | -19 | 18 | 26 |
| Crude Feed Temperature (°C) | -60 | -60 | -60 | -60 | -60 | -60 |
| | | | | | | |
| Top Pressure (psia) | 215 | 215 | 215 | 215 | 215 | 215 |
| Condenser Pressure (psia) | 215 | 215 | 215 | 215 | 215 | 215 |
| Bottoms Pressure (psia) | 217 | 217 | 217 | 217 | 217 | 217 |
| | | | | | | |
| Overhead Takeoff Rate (PPH) | 99.65 | 99.65 | 99.65 | 99.65 | 99.65 | 99.65 |
| Reflux Rate (PPH) | 2000.00 | 2000.00 | 2000.00 | 2000.00 | 2000.00 | 2000.00 |
| Bottoms Takeoff Rate (PPH) | 0.35 | 50.35 | 50.35 | 50.35 | 50.35 | 50.35 |
| Vapor Sidedraw Rate (PPH) | 0.00 | 0.00 | 0.00 | 0.00 | 0.00 | 0.00 |
| | | | | | | |

| **Crude NF₃ Feed** | | | | | | |
|---|---|---|---|---|---|---|
| NF₃ (PPH) | 99.70 | 99.70 | 99.70 | 99.70 | 99.70 | 99.70 |
| High Boiler (PPH) | -------- | 50.00 | 50.00 | 50.00 | 50.00 | 50.00 |
| N₂F₂-c (PPH) | 0.10 | 0.10 | 0.10 | 0.10 | 0.10 | 0.10 |
| N₂F₂-t (PPH) | 0.10 | 0.10 | 0.10 | 0.10 | 0.10 | 0.10 |
| N₂F₄ (PPH) | 0.10 | 0.10 | 0.10 | 0.10 | 0.10 | 0.10 |
| | | | | | | |

| **Overhead Takeoff** | | | | | | |
|---|---|---|---|---|---|---|
| NF₃ (PPH) | 99.65 | 99.65 | 99.65 | 99.65 | 99.65 | 99.65 |
| N₂F₂-c (PPH) | 0.00000 | 0.00000 | 0.00000 | 0.00000 | 0.00000 | 0.00000 |
| N₂F₂-t (PPH) | 0.00000 | 0.00005 | 0.00000 | 0.00000 | 0.00000 | 0.00000 |
| High Boiler (PPH) | -------- | 0.00000 | 0.00000 | 0.00000 | 0.00000 | 0.00000 |
| | | | | | | |

| **Overhead NF₃ Product Compositions** | | | | | | |
|---|---|---|---|---|---|---|
| N₂F₂-c (PPB-MOLAR) | 0.001 | 0.251 | 0.004 | 0.009 | 0.004 | 0.007 |
| N₂F₂-t (PPB-MOLAR) | 8.809 | 574.047 | 17.943 | 35.429 | 16.086 | 24.168 |
| High Boiler (PPB-MOLAR) | -------- | 0.000 | 0.000 | 28.205 | 0.000 | 0.000 |
| TOT IMP (PPB-MOLAR) | 8.810 | 574.298 | 17.947 | 63.644 | 16.090 | 24.175 |
| NF₃ (MOLE %) | 100.000 | 100.000 | 100.000 | 100.000 | 100.000 | 100.000 |
| | | | | | | |

| **Bottoms Takeoff** | | | | | | |
|---|---|---|---|---|---|---|
| NF₃ (PPH) | 0.0500 | 0.0500 | 0.0500 | 0.0500 | 0.0500 | 0.0500 |
| High Boiler (PPH) | -------- | 50.0000 | 50.0000 | 50.0000 | 50.0000 | 50.0000 |
| N₂F₂-c (PPH) | 0.1000 | 0.0997 | 0.1000 | 0.0999 | 0.0999 | 0.0999 |
| N₂F₂-t (PPH) | 0.1000 | 0.0994 | 0.0999 | 0.0998 | 0.0999 | 0.0999 |
| N₂F₄(PPH) | 0.1000 | 0.1000 | 0.1000 | 0.1000 | 0.1000 | 0.1000 |
| | | | | | | |
| **Column Sidedraw** | | | | | | |
| NF₃(PPH) | 0.0000 | 0.0000 | 0.0000 | 0.0000 | 0.0000 | 0.0000 |
| High Boiler (PPH) | -------- | 0.0000 | 0.0000 | 0.0000 | 0.0000 | 0.0000 |
| N₂F₂-c (PPH) | 0.0000 | 0.0000 | 0.0000 | 0.0000 | 0.0000 | 0.0000 |
| N₂F₂-t (PPH) | 0.0000 | 0.0000 | 0.0000 | 0.0000 | 0.0000 | 0.0000 |
| N₂F₄(PPH) | 0.0000 | 0.0000 | 0.0000 | 0.0000 | 0.0000 | 0.0000 |
| | | | | | | |

| **Maximum Internal Concentrations & Stage at Which It Occurs** | | | | | | |
|---|---|---|---|---|---|---|
| N₂F₂-c (MOLE %) | 32.6000 | 36.2000 | 32.7000 | 20.8000 | 31.6000 | 32.8000 |
| MAX N₂F₂-c STAGE NO. | 41 | 37 | 39 | 37 | 39 | 38 |
| N₂F₂-t (MOLE %) | 36.7000 | 42.1000 | 30.0000 | 24.6000 | 29.2000 | 28.8000 |
| MAX N₂F₂-t STAGE NO. | 41 | 34 | 39 | 37 | 39 | 38 |
| N₂F₄ (MOLE %) | 20.5000 | 0.3380 | 2.1500 | 0.1530 | 1.6300 | 1.0900 |
| MAX N₂F₄ STAGE NO. | 42 | 40 | 40 | 40 | 40 | 39 |
| | | | | | | |
| Column Diameter (inches) | 8 | 8 | 8 | 8 | 8 | 8 |

In contrast to case number 15 of table 6, where no additional high boiler is fed, the presence of the high boilers is case numbers 16 through 20 of table 6 cause the point of maximum concentration for each of N₂F₂-c, N₂F₂-t and N₂F₄ to occur at higher points in the distillation column.

### Example 3

This example is identical to case numbers 16 through 20 of comparative example 4, except that there is now a 4 pph sidedraw. The results of this distillation may be seen in Table 7.

| **Table 7** | | | | | |
|---|---|---|---|---|---|
| | | | | | |

| **CASE NUMBER** | **21** | **22** | **23** | **24** | **25** |
|---|---|---|---|---|---|
| | | | | | |
| High Boiler | PFC-116 | HCFC-22 | HFC-23 | HFC-32 | HFC-125 |
| | | | | | |
| # of Stages | 42 | 42 | 42 | 42 | 42 |
| Crude Feed Stage | 30 | 30 | 30 | 30 | 30 |
| Vapor Sidedraw Stage | 35 | 35 | 35 | 35 | 35 |
| | | | | | |
| Column Top Temperature (°C) | -75 | -75 | -75 | -75 | -75 |
| Reflux Temperature (°C) | -75 | -75 | -75 | -75 | -75 |
| Distillate Temperature (°C) | -75 | -75 | -75 | -75 | -75 |
| Bottoms Temperature (°C) | -8 | 37 | -18 | 19 | 27 |
| Crude Feed Temperature (°C) | -60 | -60 | -60 | -60 | -60 |
| | | | | | |
| Top Pressure (psia) | 215 | 215 | 215 | 215 | 215 |
| Condenser Pressure (psia) | 215 | 215 | 215 | 215 | 215 |
| Bottoms Pressure (psia) | 217 | 217 | 217 | 217 | 217 |
| | | | | | |
| Overhead Takeoff Rate (PPH) | 96.11 | 95.80 | 95.98 | 95.82 | 95.81 |
| Reflux Rate (PPH) | 2000.00 | 2000.00 | 2000.00 | 2000.00 | 2000.00 |
| Bottoms Takeoff Rate (PPH) | 49.89 | 50.20 | 50.02 | 50.18 | 50.19 |
| Vapor Sidedraw Rate (PPH) | 4.00 | 4.00 | 4.00 | 4.00 | 4.00 |
| | | | | | |

| **Crude NF₃ Feed** | | | | | |
|---|---|---|---|---|---|
| NF₃ (PPH) | 99.70 | 99.70 | 99.70 | 99.70 | 99.70 |
| High Boiler (PPH) | 50.00 | 50.00 | 50.00 | 50.00 | 0.10 |
| N₂F₂-c (PPH) | 0.10 | 0.10 | 0.10 | 0.10 | 0.10 |
| N₂F₂-t (PPH) | 0.10 | 0.10 | 0.10 | 0.10 | 0.10 |
| N₂F₄ (PPH) | 0.10 | 0.10 | 0.10 | 0.10 | 50.00 |
| | | | | | |

| **Overhead Takeoff** | | | | | |
|---|---|---|---|---|---|
| NF₃ (PPH) | 96.11 | 95.80 | 95.98 | 95.82 | 95.81 |
| N₂F₂-c (PPH) | 0.00000 | 0.00000 | 0.00000 | 0.00000 | 0.00000 |
| N₂F₂-t (PPH) | 0.00000 | 0.00000 | 0.00000 | 0.00000 | 0.00000 |
| High Boiler (PPH) | 0.00000 | 0.00000 | 0.00000 | 0.00000 | 0.00000 |
| | | | | | |

| **Overhead NF₃ Product Compositions** | | | | | |
|---|---|---|---|---|---|
| -N₂F₂-c (PPB-MOLAR) | 0.004 | 0.002 | 0.002 | 0.001 | 0.002 |
| N₂F₂-t (PPB-MOLAR) | 7.405 | 4.346 | 5.038 | 3.908 | 4.556 |
| High Boiler (PPB-MOLAR) | 0.000 | 0.000 | 25.613 | 0.000 | 0.000 |
| TOT IMP (PPB-MOLAR) | 7.408 | 4.347 | 30.654 | 3.910 | 4.558 |
| NF₃ (MOLE %) | 100.000 | 100.000 | 100.000 | 100.000 | 100.000 |
| | | | | | |

| **Bottoms Takeoff** | | | | | |
|---|---|---|---|---|---|
| NF₃ (PPH) | 0.0500 | 0.0500 | 0.0500 | 0.0500 | 0.0500 |
| High Boiler (PPH) | 49.7380 | 49.9870 | 49.8360 | 49.9550 | 49.9900 |
| N₂F₂-c (PPH) | 0.0006 | 0.0408 | 0.0219 | 0.0479 | 0.0283 |
| N₂F₂-t (PPH) | 0.0006 | 0.0226 | 0.0125 | 0.0263 | 0.0178 |
| N₂F₄ (PPH) | 0.0983 | 0.1000 | 0.1000 | 0.1000 | 0.0999 |
| | | | | | |

| **Column Sidedraw** | | | | | |
|---|---|---|---|---|---|
| NF₃ (PPH) | 3.5377 | 3.8505 | 3.6700 | 3.8290 | 3.8360 |
| High Boiler (PPH) | 0.2618 | 0.0129 | 0.1643 | 0.0452 | 0.0100 |
| N₂F₂-c (PPH) | 0.0994 | 0.0592 | 0.0781 | 0.0521 | 0.0717 |
| N₂F₂-t (PPH) | 0.0994 | 0.0774 | 0.0875 | 0.0737 | 0.0822 |
| N₂F₄ (PPH) | 0.0017 | 0.0000 | 0.0000 | 0.0000 | 0.0001 |
| | | | | | |

| **Maximum Internal Concentrations & Stage at Which It Occurs** | | | | | |
|---|---|---|---|---|---|
| N₂F₂-c (MOLE %) | 3.5100 | 25.8000 | 9.5100 | 25.2000 | 19.3000 |
| MAX N₂F₂-C STAGE NO. | 35 | 39 | 37 | 39 | 38 |
| N₂F₂-t (MOLE %) | 2.9000 | 12.6000 | 5.8700 | 13.1000 | 9.9200 |
| MAX N₂F₂-t STAGE NO. | 35 | 39 | 37 | 39 | 38 |
| N₂F₄ (MOLE %) | 0.4650 | 2.6800 | 0.1650 | 2.0100 | 1.8800 |
| MAX N₂F₄ STAGE NO. | 37 | 40 | 39 | 40 | 39 |
| | | | | | |
| Column Diameter (inches) | 8 | 8 | 8 | 8 | 8 |

This example shows how a sidedraw stream may be used to remove N₂F₂-t, N₂F₂-c and N₂F₄ from the column, and so reduce the maximum concentration of each developed. The points of maximum concentration of each impurity in cases 16 through 25 where a high boiler is added is still at a higher point than in case number 15 where no high boiler is added, but the maximum concentrations of N₂F₂-c and N₂F₂-t are considerably reduced compared to each high boilers respective case in comparative example 4.

## Claims

1. A process for reducing the concentration of at least one impurity selected from the group consisting of dinitrogen difluoride and dinitrogen tetrafluoride in a first mixture comprising nitrogen trifluoride and said at least one impurity, said process comprising:
(a) distilling said first mixture in a distillation column in the presence of a compound having a higher normal boiling point than nitrogen trifluoride;
(b) removing a second mixture comprising said at least one impurity from said distillation column at a point between the top and the bottom of said distillation column;
(c) removing a third mixture comprising said compound having a higher normal boiling point than nitrogen trifluoride from the bottom of said distillation column; and
(d) removing a nitrogen trifluoride product having reduced concentration of said at least one impurity from the top of said distillation column.

2. The process of claim 1 wherein said compound having a higher normal boiling point than nitrogen trifluoride is introduced into said distillation column during said distilling step in the liquid phase at a point in said distillation column above the point at which said first mixture is introduced into said distillation column.

3. The process of claim 1 wherein said first mixture comprises up to about 5,000 parts-per-million-molar of said at least one impurity.

4. The process of claim 1 wherein said compound having a higher normal boiling point than nitrogen trifluoride has a normal boiling point of from about - 90°C to about -20°C.

5. The process of claim 4 wherein said compound having a higher normal boiling point than nitrogen trifluoride is at least one compound selected from the group consisting of hydrocarbons, hydrofluorocarbons, hydrochlorofluorocarbons, hydrochlorocarbons, perfluorocarbons, organic oxides and inorganic oxides.

6. The process of claim 5 wherein said compound having a higher normal boiling point than nitrogen trifluoride is at least one compound selected from the group consisting of ethane, propane, propylene, methyl fluoride, difluoromethane, fluoroethane, 1,1,1-trifluoroethane, pentafluoroethane, chlorodifluoromethane, methyl chloride, hexafluoroethane, nitrous oxide, carbon dioxide, carbonyl fluoride, trifluoroacetyl fluoride.

7. The process of claim 5 wherein said compound having a higher normal boiling point than nitrogen trifluoride is at least one compound selected from the group consisting of methyl fluoride, difluoromethane, fluoroethane, chlorodifluoromethane, and nitrous oxide.

8. The process of claim 5 wherein said compound having a higher normal boiling point than nitrogen trifluoride is nitrous oxide.

9. The process of claim 1 wherein the temperature at the top of said first distillation column during said distilling step is from about -90°C to about - 50°C.

10. The process of claim 1 wherein said removing of said second mixture from said distillation column is sufficient to maintain the maximum concentration of said at least one impurity in said distillation column below about 2,000 ppm-molar.

11. The process of claim 1 wherein said point between the top and the bottom of said distillation column is located within the bottom 50% of the total number of theoretical stages in said distillation column.

12. The process of claim 1 wherein said point between the top and the bottom of said distillation column is located within the bottom 25% of the total number of theoretical stages in said distillation column.

13. The process of claim 1 wherein said nitrogen trifluoride product contains less than about 0.1 parts-per-million-molar of said at least one impurity.

14. The process of claim 1 wherein said compound having a higher normal boiling point than nitrogen trifluoride is nitrous oxide.

15. The process of claim 14, wherein between steps (b) and (c) said process additionally comprises:
removing said at least one impurity from said second mixture to form a further mixture, and feeding said further mixture to said distillation column.

## Patentansprüche

1. Verfahren zur Verringerung der Konzentration wenigstens einer unter Distickstoffdifluorid und Distickstofftetrafluorid ausgewählten Verunreinigung in einem ersten Gemisch, enthaltend Stickstofftrifluorid und die wenigstens eine Verunreinigung, wobei man
(a) das erste Gemisch in einer Destillierkolonne in Gegenwart einer Verbindung mit einem höheren Normalsiedepunkt als Stickstofftrifluorid destilliert;
(b) ein zweites Gemisch, das die wenigstens eine Verunreinigung enthält, an einer Stelle zwischen dem Kopf und dem Sumpf der Destillierkolonne aus der Destillierkolonne entnimmt;
(c) ein drittes Gemisch, das die Verbindung mit dem höheren Normalsiedepunkt als Stickstofftrifluorid enthält, aus dem Sumpf der Destillierkolonne entnimmt; und
(d) und ein Stickstofftrifluorid-Produkt mit einer verringerten Konzentration an der wenigstens einen Verunreinigung am Kopf der Destillierkolonne entnimmt.

2. Verfahren nach Anspruch 1, wobei man die Verbindung mit dem höheren Normalsiedepunkt als Stickstofftrifluorid in die Destillierkolonne während des Destillationsschrittes in der flüssigen Phase an einer Stelle oberhalb der Stelle in die Destillierkolonne einleitet, bei der man das erste Gemisch in die Destillierkolonne einleitet.

3. Verfahren nach Anspruch 1, wobei das erste Gemisch bis zu etwa 5000 mol-ppm der wenigstens einen Verunreinigung enthält.

4. Verfahren nach Anspruch 1, wobei die Verbindung mit dem höheren Normalsiedepunkt als Stickstofftrifluorid einen Normalsiedepunkt von etwa -90 °C bis etwa -20 °C aufweist.

5. Verfahren nach Anspruch 4, wobei die Verbindung mit dem höheren Normalsiedepunkt als Stickstofftrifluorid wenigstens eine Verbindung ist, die ausgewählt ist unter Kohlenwasserstoffen, Fluorkohlenwasserstoffen, Chlorfluorkohlenwasserstoffen, Chlorkohlenwasserstoffen, Perfluorkohlenwasserstoffen, organischen Oxiden und anorganischen Oxiden.

6. Verfahren nach Anspruch 5, wobei die Verbindung mit dem höheren Normalsiedepunkt als Stickstofftrifluorid wenigstens eine Verbindung ist, die ausgewählt ist unter Ethan, Propan, Propylen,-Methylfluorid, Difluormethan, Fluorethan, 1,1,1-Trifluorethan, Pentafluorethan, Chlordifluormethan, Methylchlorid, Hexafluorethan, Distickstoffoxid, Kohlendioxid, Carbonylfluorid, Trifluoracetylfluorid.

7. Verfahren nach Anspruch 5, wobei die Verbindung mit dem höheren Normalsiedepunkt als Stickstofftrifluorid wenigstens eine Verbindung ist, die ausgewählt ist unter Methylfluorid, Difluormethan, Fluoroethan, Chlordifluormethan und Distickstoffoxid.

8. Verfahren nach Anspruch 5, wobei es sich bei der Verbindung mit dem höheren Normalsiedepunkt als Stickstofftrifluorid um Distickstoffoxid handelt.

9. Verfahren nach Anspruch 1, wobei die Temperatur am Kopf der ersten Destillierkolonne während des Destillationsschrittes etwa -90 °C bis etwa -50 °C beträgt.

10. Verfahren nach Anspruch 1, wobei die Entnahme des zweiten Gemischs aus der Destillierkolonne ausreicht, um die maximale Konzentration an der wenigstens einen Verunreinigung in der Destillierkolonne unterhalb etwa 2000 mol-ppm zu halten.

11. Verfahren nach Anspruch 1, wobei sich die Stelle zwischen dem Kopf und dem Sumpf der Destillierkolonne innerhalb der zum Sumpf gelegenen 50 % der Gesamtzahl der theoretischen Böden in der Destillierkolonne befindet .

12. Verfahren nach Anspruch 1, wobei sich die Stelle zwischen dem Kopf und dem Sumpf der Destillierkolonne innerhalb der zum Sumpf gelegenen 25 % der Gesamtzahl der theoretischen Böden in der Destillierkolonne befindet.

13. Verfahren nach Anspruch 1, wobei das Stickstofftrifluorid-Produkt weniger als etwa 0,1 mol-ppm der wenigstens einen Verunreinigung enthält.

14. Verfahren nach Anspruch 1, wobei es sich bei der Verbindung mit dem höheren Normalsiedepunkt als Stickstofftrifluorid um Distickstoffoxid handelt.

15. Verfahren nach Anspruch 14, wobei man außerdem zwischen den Schritten (b) und (c) die wenigstens eine Verunreinigung aus dem zweiten Gemisch unter Erhalt eines weiteren Gemischs entfernt und dieses weitere Gemisch in die Destillierkolonne einspeist.

## Revendications

1. Procédé pour réduire la concentration d'au moins une impureté choisie dans le groupe constitué du difluorure de diazote et du tétrafluorure de diazote dans un premier mélange comprenant du trifluorure d'azote et ladite au moins une impureté, ledit procédé comprenant :
(a) la distillation dudit premier mélange dans une colonne de distillation en présence d'un composé ayant un point d'ébullition normal supérieur au trifluorure d'azote;
(b) enlever un deuxième mélange comprenant ladite au moins une impureté à partir de ladite colonne de distillation en un point entre le sommet et le fond de ladite colonne de distillation ;
(c) enlever un troisième mélange comprenant ledit composé ayant un point d'ébullition normal supérieur au trifluorure d'azote, à partir du fond de ladite colonne de distillation ; et
(d) enlever un produit de trifluorure d'azote ayant une concentration réduite en ladite au moins une impureté, à partir du sommet de ladite colonne de distillation.

2. Procédé selon la revendication 1, dans lequel ledit composé ayant un point d'ébullition normal supérieur au trifluorure d'azote est introduit dans ladite colonne de distillation pendant ladite étape de distillation dans la phase liquide en un point de ladite colonne de distillation au-dessus du point auquel ledit premier mélange est introduit dans ladite colonne de distillation.

3. Procédé selon la revendication 1, dans lequel ledit premier mélange comprend jusqu'à environ 5000 parties-par-million-molaires de ladite au moins une impureté.

4. Procédé selon la revendication 1, dans lequel ledit composé ayant un point d'ébullition normal supérieur au trifluorure d'azote a un point d'ébullition normal d'environ - 90°C à environ - 20°C.

5. Procédé selon la revendication 4, dans lequel ledit composé ayant un point d'ébullition normal supérieur au trifluorure d'azote est au moins un composé choisi dans le groupe constitué des hydrocarbures, hydrofluorocarbures, hydrochlorofluorocarbures, hydrochlorocarbures, perfluorocarbures, oxydes organiques et oxydes inorganiques.

6. Procédé selon la revendication 5, dans lequel ledit composé ayant un point d'ébullition normal supérieur au trifluorure d'azote est au moins un composé choisi dans le groupe constitué de l'éthane, propane, propylène, fluorure de méthyle, difluorométhane, fluoroéthane, 1,1,1-trifluoroéthane, pentafluoroéthane, chlorodifluorométhane, chlorure de méthyle, hexafluoroéthane, oxyde nitreux, dioxyde de carbone, fluorure de carbonyle, fluorure de trifluoroacétyle.

7. Procédé selon la revendication 5, dans lequel ledit composé ayant un point d'ébullition normal supérieur au trifluorure d'azote est au moins un composé choisi dans le groupe constitué du fluorure de méthyle, difluorométhane, fluoroéthane, chlorodifluorométhane, et oxyde nitreux.

8. Procédé selon la revendication 5, dans lequel ledit composé ayant un point d'ébullition normal supérieur au trifluorure d'azote est l'oxyde nitreux.

9. Procédé selon la revendication 1, dans lequel la température au sommet de ladite colonne de distillation pendant ladite étape de distillation est d'environ - 90°C à environ - 50°C.

10. Procédé selon la revendication 1, dans lequel ledit enlèvement dudit deuxième mélange de ladite colonne de distillation est suffisant pour maintenir, la concentration maximale de ladite au moins une impureté dans ladite colonne de distillation en dessous d'environ 2000 ppm-molaires.

11. Procédé selon la revendication 1, dans lequel ledit point entre le sommet et le fond de ladite colonne de distillation est situé dans les 50 % du fond du nombre total d'étages théoriques dans ladite colonne de distillation.

12. Procédé selon la revendication 1, dans lequel ledit point entre le sommet et le fond de ladite colonne de distillation est situé dans les 25 % du fond du nombre total d'étages théoriques dans ladite colonne de distillation.

13. Procédé selon la revendication 1, dans lequel ledit produit de trifluorure d'azote contient moins d'environ 0,1 partie-par-million-molaire de ladite au moins une impureté.

14. Procédé selon la revendication 1, dans lequel ledit composé ayant un point d'ébullition normal supérieur au trifluorure d'azote est l'oxyde nitreux.

15. Procédé selon la revendication 14, dans lequel, entre les étapes (b) et (c), ledit procédé comprend en outre :
l'enlèvement de ladite au moins une impureté dudit deuxième mélange pour former un autre mélange, et l'alimentation dudit autre mélange à ladite colonne de distillation.
